# EUROPÄISCHE PATENTANMELDUNG

(11) **EP 4 817 720 A1**
(43) Veröffentlichungstag der Anmeldung: **07.10.2026**
(21) Anmeldenummer: 25168276.1
(22) Anmeldetag: 03.04.2025
(51) Int. Cl.: B01D 39/16

(54) **FILTERMATERIAL, VERFAHREN ZUR HERSTELLUNG DES FILTERMATERIALS UND VERWENDUNG VON SCHMELZGEBLASENEN POLYPROPYLENFASERN**

(71) Anmelder: Carl Freudenberg KG, 69469 Weinheim (DE)
(72) Erfinder: SCHACHT, Dr. Heiko, 69469 Weinheim (DE); Kurzer, Rosemarie, 54472 Burgen (DE); HERMANN, Jochen, 66879 Reichenbach-Steegen (DE); Staudenmayer, Oliver, Dr., 69469 Weinheim (DE)

(57) **Zusammenfassung**

Die Erfindung betrifft ein Filtermaterial (10) umfassend eine erste Schicht (2), umfassend schmelzgeblasene Polypropylenfasern, wobei die Polypropylenfasern mit einer relativen Häufigkeit, wie mittels des in der Beschreibung offenbarten Verfahrens bestimmt, von mindestens 20% einen Faserdurchmesser in einem Bereich von 400 nm bis 600 nm aufweisen und mit einer relativen Häufigkeit, wie mittels des in der Beschreibung offenbarten Verfahrens bestimmt, von mindestens 20 % einen Faserdurchmesser in einem Bereich von > 600 nm bis 800 nm aufweisen.

## Beschreibung

Die Erfindung betrifft ein Filtermaterial mit hoher Filterwirkung und geringem Druckdifferenzanstieg sowie ein Verfahren zur Herstellung eines solchen Filtermaterials. Ebenso betrifft die vorliegende Erfindung auch die Verwendung von schmelzgeblasenen Polypropylenfasern.

Luft- und gaspermeable Filtermaterialien, wie sie beispielsweise in WO 2019/213107 A1 beschrieben werden, werden heutzutage häufig mit Nanofaserlagen ausgestattet, um eine hohe Partikelabscheideleistung erreichen zu können. Die hohe Effizienz derartiger Filtermaterialien sorgt allerdings dafür, dass ein rascher Druckdifferenzanstieg mit Verblockung des Filtermaterials und daraus folgend, eine nachteilig hohe Wechselrate resultiert.

Ausgehend von dem vorstehend genannten Stand der Technik ist es damit eine Aufgabe der vorliegenden Erfindung, ein Filtermaterial bereitzustellen, das sich einerseits durch eine sehr gute Filterleistung, also allgemein eine hohe Effizienz und darunter vorteilhafterweise auch eine hohe Partikelabscheiderate und andererseits durch ein gesteigertes Abscheidungsvermögen, insbesondere ein hohes Staubeinlagervermögen mit geringem Druckverlustanstieg und daraus resultierend durch eine verlängerte Lebensdauer und größere Wechselintervalle auszeichnet.

Die Lösung dieser Aufgabe erfolgt durch die Merkmale der unabhängigen Ansprüche. Die abhängigen Ansprüche haben vorteilhafte Weiterbildungen und Ausgestaltungen der Erfindung zum Inhalt.

Demnach betrifft die vorliegende Erfindung ein Filtermaterial mit einer ersten Schicht, die schmelzgeblasene Polypropylenfasern umfasst.

Unter einem Filtermaterial wird im Sinne der vorliegenden Erfindung ein schichtförmiges Material verstanden, das z.B. nach Konfektionierung, also Anpassung der Größe und ggf. Schichtung zu einer Mehrschichtanordnung, als Filtermedium Anwendung findet. Das Filtermaterial kann auch in Filterkassetten eingesetzt und z.B. als Austauschfilter verwendet werden. Das erfindungsgemäße Filtermaterial findet insbesondere Anwendung im Luftfilterbereich sowohl in Gebäuden als auch im Personennahverkehr oder Personenfernverkehr, wie z.B. in Bussen und Bahnen, auf Schiffen und im Flugverkehr, ist aber nicht darauf eingeschränkt und kann auch als Flüssigkeitsfilter, wie z.B. Wasserfilter oder auch als Gasfilter, wie z.B. Rußpartikelfilter oder in Klimaanlagen, eingesetzt werden.

Für das erfindungsgemäße Filtermaterial und genauer gesagt, für die erste Schicht des Filtermaterials werden schmelzgeblasene Polypropylenfasern (im Folgenden auch PP-Fasern genannt) verwendet. Schmelzgeblasene PP-Fasern weisen gegenüber anderen, auch kunststoffbasierten Fasern den Vorteil auf, dass sie eine hohe mechanische und chemische Stabilität haben. Schmelzblasen, das auch Meltblowing genannt wird, ist ein Vorgang, bei dem eine extrudierte Polymerschmelze durch Wechselwirkung mit heisser Luft zu feinen Fasern unter Einstellung einer gleichmäßigen Faserstruktur verstreckt wird. Es wird ein thermoplastisches, faserbildendes Polymer extrudiert und beim Verlassen der Spinndüsen in einen heißen (meist über 250°C) Hochgeschwindigkeitsluftstrom geleitet. Der heiße Hochgeschwindigkeitsluftstrom tritt normalerweise in der Nähe der Düsenbohrungen aus und führt die extrudierten Polymerströme. In Abhängigkeit der einwirkenden Temperatur und der Luftvolumina resultieren durch die Verstreckung sehr feine Filamente. Die Filamente werden meist auf einem Ablageband oder einer Ablagetrommel abgelagert, wobei ein feines, typischerweise selbstgebundenes Vliesstoffnetz entsteht. Das Schmelzblasen unterscheidet sich von der herkömmlichen Spinnvlies-Technologie, bei der im Unterschied zum Meltblowing die Fasern nicht durch Hochgeschwindigkeits-Luftströme gezogen werden. Bei der herkömmlichen Spinnvlies-Technologie werden nämlich die aus der Spinndüse austretenden Filamente zunächst gekühlt, mittels Luft moderat verstreckt und auf einem Sammelband abgelegt. Es resultieren deutlich gröbere Faserdurchmesser als beim Meltblown-Prozess und die Verfestigung des Materials erfolgt meist durch eine nachfolgende Kalandrierung. Das Schmelzblasverfahren ist gut bekannt und in verschiedenen Patenten und Publikationen, beispielsweise NRL -Bericht 4364, " Herstellung von superfeinen organischen Fasern " von V. A. Wendt, E.L. Boone und C. D. Fluharty ; NRL -Bericht 5265, " eine verbesserte Vorrichtung für die Bildung von superfeinen Thermoplastic Fibers " von K. D. Lawrence, R. T. Lukas , und J.A. Junge ; und U.S. Patent No. 3,849,241 , erteilt am 19. November 1974 an Buntin, et al, beschrieben. Diese Druckschriften sind hiermit durch Bezugnahme als Referenz aufgenommen.

Die Verwendung von Polypropylen hat sich als besonders vorteilhaft herausgestellt, da es kostengünstig und weitläufig verfügbar ist, eine Elektrizitätskonstante im bevorzugten Bereich hat und somit gut elektrostatisch aufladbar ist. Durch den Meltblown Prozess lassen sich submicrone PP-Fasern erzeugen, die auf einem geeigneten Untergrund, ggf. auf einem Substrat, abgelegt werden können.

Die für das erfindungsgemäße Filtermaterial verwendeten schmelzgeblasenen PP-Fasern weisen mit einer relativen Häufigkeit, wie mittels des in der Beschreibung offenbarten Verfahrens bestimmt, von mindestens 20%, beispielsweise von 20% bis 60%, einen Faserdurchmesser in einem Bereich von 400 nm bis 600 nm auf und mit einer relativen Häufigkeit, wie mittels des in der Beschreibung offenbarten Verfahrens bestimmt, von mindestens 20% beispielsweise von 20% bis 60%, einen Faserdurchmesser in einem Bereich von > 600 nm bis 800 nm auf.

Erfindungsgemäß bevorzugt weisen die Polypropylenfasern mit einer relativen Häufigkeit, wie mittels des in der Beschreibung offenbarten Verfahrens bestimmt, von mindestens 25%, beispielsweise von 25% bis 60%, bevorzugt von 25% bis 55%, noch bevorzugter von 30% bis 50%, insbesondere von 35% bis 45%, einen Faserdurchmesser in einem Bereich von 400 nm bis 600 nm auf. Die Bestimmung der relativen Häufigkeit des Faserdurchmessers ist im Kapitel Messverfahren und Normen beschrieben.

Erfindungsgemäß ebenfalls bevorzugt weisen die Polypropylenfasern mit einer relativen Häufigkeit, wie mittels des in der Beschreibung offenbarten Verfahrens bestimmt, von 20% bis 50%, noch bevorzugter von 20% bis 40%, insbesondere von 25% bis 35%, einen Faserdurchmesser in einem Bereich von > 600 nm bis 800 nm auf.

Weiter bevorzugt weisen die Polypropylenfasern mit einer relativen Häufigkeit, wie mittels des in der Beschreibung offenbarten Verfahrens bestimmt, von mindestens 20%, beispielsweise von 20% bis 60%, bevorzugt von mindestens 25%, beispielsweise von 25% bis 60%, noch bevorzugter von 25% bis 55%, noch bevorzugter von 30% bis 50%, insbesondere von 35% bis 45%, einen Faserdurchmesser in einem Bereich von 400 nm bis 575 nm auf.

Weiter bevorzugt weisen die Polypropylenfasern mit einer relativen Häufigkeit, wie mittels des in der Beschreibung offenbarten Verfahrens bestimmt, von mindestens 20%, beispielsweise von 20% bis 60%, noch bevorzugter von 20% bis 50%, noch bevorzugter von 20% bis 40%, insbesondere von 25% bis 35%, einen Faserdurchmesser in einem Bereich von 625 nm bis 800 nm auf.

In einer besonders bevorzugten Ausführungsform weisen die Polypropylenfasern mit einer relativen Häufigkeit, wie mittels des in der Beschreibung offenbarten Verfahrens bestimmt, von 20% bis 60%, bevorzugt von mindestens 25%, beispielsweise von 25% bis 60%, noch bevorzugter von 25% bis 55%, noch bevorzugter von 30% bis 50%, insbesondere von 35% bis 45%, einen Faserdurchmesser in einem Bereich von 400 nm bis 575 nm auf und mit einer relativen Häufigkeit, wie mittels des in der Beschreibung offenbarten Verfahrens bestimmt von 20% bis 50%, noch bevorzugter von 20% bis 40%, insbesondere von 25% bis 35%, einen Faserdurchmesser in einem Bereich von 625 nm bis 800 nm auf.

Bevorzugt weisen die Polypropylenfasern mit einer höheren relativen Häufigkeit, wie mittels des in der Beschreibung offenbarten Verfahrens bestimmt, einen Faserdurchmesser in einem Bereich von 400 nm bis 600 nm, bevorzugt von 400 nm bis 575 nm als einen Faserdurchmesser in einem Bereich von > 600 nm bis 800 nm, bevorzugt von 625 nm bis 800 nm auf.

Das Filtermaterial kann auch weitere PP-Fasern enthalten, deren Faserdurchmesser nicht in einem der Bereiche von 400 bis 600 nm und > 600 bis 800 nm liegt. Der Faserdurchmesser dieser weiteren PP-Fasern beträgt vorzugsweise weniger als 5 µm, bevorzugt weniger als 4 µm, noch bevorzugter weniger als 3 µm, noch bevorzugter weniger als 2,5 µm, insbesondere weniger als 2 µm, um die Filtrationswirkung des Filtermaterials weiter zu verbessern, ohne eine wesentliche Druckdifferenzerhöhung zu bewirken.

Es hat sich herausgestellt, dass eine Faserdurchmesser-Verteilung von schmelzgeblasenen PP-Fasern, wie für das erfindungsgemäße Filtermaterial angegeben, zu einer besonders hohen Filterwirkung und damit einer sehr guten Filtereffizienz führt, wobei gleichzeitig der Druckdifferenzanstieg verlängert wird, so dass das Filtermaterial eine hohe Lebensdauer aufweist und folglich großen Wechselintervallen unterliegt.

In dem erfindungsgemäßen Fasermaterial kann die erste Schicht neben submicronen PP-Fasern weitere Fasermaterialien oder andere Filterhilfsmittel umfassen, beispielsweise um nicht nur Partikel, sondern auch andere Schadstoffe, wie z.B. Gase, Bakterien oder Viren zu abzuscheiden.

Aufgrund einer vereinfachten Herstellbarkeit bei sehr guter Filtrationswirkung mit gleichzeitig geringem Druckdifferenzanstieg ist es vorteilhaft, wenn die erste Schicht aus schmelzgeblasenen Polypropylenfasern mit einem Faserdurchmesser von weniger als 5 µm besteht, wobei die Polypropylenfasern mit einer relativen Häufigkeit, wie mittels des in der Beschreibung offenbarten Verfahrens bestimmt, von mindestens 20%, beispielsweise von 20% bis 60%, einen Faserdurchmesser in einem Bereich von 400 nm bis 600 nm aufweisen und mit einer relativen Häufigkeit, wie in der Beschreibung bestimmt, von mindestens 20%, beispielsweise von 20% bis 60%, einen Faserdurchmesser in einem Bereich von > 600 nm bis 800 nm aufweisen. Ein derartiges Filtermaterial eignet sich insbesondere zur Filtration von Partikeln aus Luft. Das erfindungsgemäße Filtermaterial kann zu mehreren Schichten gestapelt und/oder mit anderen Filtermaterialien kombiniert werden. So kann die Filterwirkung gezielt eingestellt werden. In einer bevorzugten Ausführungsform weisen sämtliche schmelzgeblasenen Polypropylenfasern einen Faserdurchmesser von weniger als 5 µm auf.

Gemäß einer weiteren vorteilhaften Weiterbildung hat die erste Schicht ein Flächengewicht in einem Bereich von 5 bis 20 g/m² und insbesondere von 6 bis 15 g/m². Das Flächengewicht wird mittels EN 29073-1 : 1992 gemessen. Ein Flächengewicht in einem Bereich von 5 bis 20 g/m² hat sich vorteilhaft im Lichte einer Verbesserung der Filtrationswirkung gezeigt, die weiter dadurch verbessert werden kann, dass das Flächengewicht zu höheren Werten verschoben ist. Ab einem Flächengewicht von mehr als 15 g/m² und insbesondere von mehr als 20 g/m² kann es allerdings zu einem leichten Druckdifferenzanstieg kommen, der besonders gut dadurch vermieden werden kann, wenn das Flächengewicht auf maximal 15 g/m² begrenzt wird.

Um die Abscheiderate bzw. Adsorptionsrate von Partikeln durch das Filtermaterial zu erhöhen und damit die Filtrationsleistung weiterhin zu verbessern, weist die erste Schicht vorzugsweise eine Schichtdicke in einem Bereich von 10 µm bis 200 µm, insbesondere von 20 µm bis 150 µm und insbesondere von 40 µm bis 80 µm auf. Die Schichtdicke wird in Anlehnung an DIN EN ISO 9073-2: 1996 bestimmt, wobei wie folgt gemessen wird: Die Faserlage aus submicronen schmelzgeblasenen PP-Fasern wird von einem Stempel mit einer Fläche A von 10cm² und einer Kraft von 12,5cN belastet, wobei der Dickenmesswert in mm im komprimierten Bereich abgelesen wird. Je höher die Schichtdicke, desto höher ist auch die Filtereffizienz und somit die Adsorptionsrate des Filters. Desto höher sind aber auch die Kosten für das Filtermaterial. Im Lichte einer Abwägung der vorstehenden Effekte hat sich eine Schichtdicke der ersten Schicht in einem Bereich von 40 µm bis 80 µm als besonders vorteilhaft herausgestellt.

Ferner vorteilhaft umfasst das Filtermaterial ein erstes Substrat, wobei die erste Schicht auf dem ersten Substrat angeordnet ist und wobei insbesondere die schmelzgeblasenen PP-Fasern auf dem ersten Substrat abgeschieden sind. Die Verwendung eines ersten Substrats hat den Vorteil, dass das Filtermaterial zusätzlich mechanisch stabilisiert wird. Auch schützt das erste Substrat die PP-Fasern vor Verunreinigung, sofern das Filtermaterial gelagert oder transportiert wird. Das Substrat hat sich als besonders vorteilhaft zur Ablage der schmelzgeblasenen PP-Fasern erwiesen, da diese direkt schichtartig auf dem Substrat abgeschieden werden können, so dass ein mehrfaches Umschichten der PP-Fasern vermieden werden kann. In einer bevorzugten Ausführungsform sind die erste Schicht und das erste Substrat mittels Kalandrieren miteinander verbunden. Dies erhöht die Haftung der beiden Schichten miteinander.

Zur Verbesserung der Filterwirkung ist das erste Substrat vorteilhafterweise ausgewählt aus mindestens einem ausgewählt aus einem Spinnvlies, Nassvlies, Stapelfaservlies, Gelege, Gewirke, Gewebe, Gestricke und Kombinationen daraus. Die vorstehenden Gebilde zeichnen sich durch eine gewisse Porosität aus, so dass Partikel sie passieren können, um von der ersten Schicht abgeschieden zu werden.

Als ferner vorteilhaft im Lichte einer ausgewogenen Balance zwischen hoher Filterwirkung und geringem Druckdifferenzanstieg hat es sich herausgestellt, wenn das Flächengewicht des ersten Substrats in einem Bereich von 8 g/m² bis 35 g/m² und vorzugsweise in einem Bereich von 10 bis 25 g/m² und insbesondere in einem Bereich von 10 bis 20 g/m² liegt. Das Flächengewicht wird wiederum wie vorstehend für die erste Schicht beschrieben, ermittelt. Liegt das Flächengewicht des ersten Substrats in einem Bereich von 8 bis 35 g/cm², so wird die Filterleistung nicht nachteilig beeinflusst. Zudem wird durch ein Flächengewicht des ersten Substrats in einem Bereich von 10 bis 25 g/m² die mechanische Stabilität des Filtermaterials verbessert und einer Verunreinigung und Beschädigung der ersten Schicht bei Lagerung und Transport besonders effizient vorgebeugt.

Zur weiteren Verbesserung der mechanischen Stabilität hat das erste Substrat vorzugsweise eine Schichtdicke in einem Bereich von 50 bis 400 µm, noch bevorzugter in einem Bereich von 100 bis 300 µm und insbesondere in einem Bereich von 200 bis 300 µm. Die Schichtdicke wird dabei wie für die Schichtdicke der ersten Schicht beschrieben gemessen. Je höher die Schichtdicke des ersten Substrats, desto höher ist die Stabilität des Filtermaterials. Nachteilig an einer hohen Schichtdicke des ersten Substrats ist aber auch der Eintrag von zusätzlichem Gewicht und Volumen für das Filtermaterial, so dass die Schichtdicke des ersten Substrats vorteilhafterweise in einem Bereich von 100 bis 300 µm und insbesondere von 200 bis 300 µm liegt. Hierdurch wird auch der Druckdifferenzanstieg nicht wesentlich gesteigert.

Besonders bevorzugt weist das Komposit aus erstem Substrat und erster Schicht eine Schichtdicke in einem Bereich von 50 bis 400 µm, noch bevorzugter in einem Bereich von 100 bis 300 µm und insbesondere in einem Bereich von 200 bis 300 µm auf. Die Schichtdicke wird dabei wie für die Schichtdicke der ersten Schicht beschrieben gemessen.

Um die Haftung zwischen erstem Substrat und der ersten Schicht zu optimieren, ist das Material des ersten Substrats vorzugsweise ein Polyolefin und ist insbesondere Polypropylen (PP). Das PP muss dabei nicht identisch sein mit demjenigen der schmelzgeblasenen PP-Fasern, weist aber insbesondere einen Schmelzbereich auf, der ähnlich ist zu dem Schmelzbereich der schmelzgeblasenen PP-Fasern.

Das Filtermaterial, das mindestens eine wie vorstehend beschriebene erste Schicht und ein erstes Substrat umfasst, ist als Filtermedium sehr gut geeignet, um Partikel beispielsweise aus Luft oder auch aus Flüssigkeiten, aber insbesondere aus Luft, zu filtern. Alle herkömmlichen in der Luft vorhandenen Staubpartikel, wie z.B. Blütenstaub, Pollen, Ruß und Zigarettenrauch können mit dem erfindungsgemäßen Filtermaterial aus der Luft entfernt werden, wobei die Staubpartikel an das Filternetzwerk aus den schmelzgeblasenen PP-Fasern angelagert werden.

Um neben der sehr guten Filtereffizienz bei geringem Druckdifferenzanstieg die Handhabung zu verbessern und das Anwendungsgebiet möglichst umfassend zu gestalten, hat das Filtermaterial vorzugsweise eine Schichtdicke, gemessen wie die Schichtdicke der ersten Schicht, in einem Bereich von 60 bis 600 µm, noch bevorzugter in einem Bereich von 100 bis 400 µm und insbesondere in einem Bereich von 200 bis 300 µm.

Darüber hinaus ist es für ein ausgewogenes Eigenschaftsprofil an Filterwirksamkeit und Druckdifferenzanstiegsminimierung weiter von Vorteil, wenn das Filtermaterial ein Flächengewicht in einem Bereich von 10 bis 50 g/m² und insbesondere von 15 bis 40 g/m² hat. Das Flächengewicht wird mittels EN 29073-1 : 1992 gemessen.

Gemäß einer weiteren bevorzugten Ausführungsform hat das Filtermaterial eine Luftdurchlässigkeit von 400 bis 500 l/m²·s. Die Luftdurchlässigkeit wird gemäß DIN EN ISO 9237 : 1995 gemessen, wobei der Messdruck bei 200 Pa und die Messfläche bei 20 cm² liegt. Ist die Luftdurchlässigkeit des Filters in einem Bereich von 400 bis 5001/m²·s, so verfügt das Filtermaterial über eine hohe Durchsatzrate und kann hohe Luftmengen in kurzer Zeit filtern. Dies ist besonders vorteilhaft, wenn das Filtermaterial in einem Bereich eingesetzt wird, in dem ein relativ hohes Raumvolumen herrscht.

Zur Verbesserung der Filtereffizienz umfasst das Filtermaterial ferner vorteilhaft Aktivkohle. Die Aktivkohle ist im Einzelnen nicht beschränkt, wird aber vorzugsweise aus nachwachsenden Rohstoffen gewonnen, und insbesondere aus Kokosnussschalen. Eine Aktivkohle aus Kokosnussschalen hat sich insbesondere aufgrund ihrer hohen Härte und damit guten Widerstandskraft als vorteilhaft herausgestellt und weist darüber hinaus eine besonders gute Adsorptionsfähigkeit für n-Butan auf, welches Bestandteil von Motorenbenzin ist. Ein erfindungsgemäßes Filtermaterial mit Aktivkohle ist aufgrund der großen aktiven Oberfläche der Aktivkohle insbesondere auch dann bevorzugt, wenn das zu filternde Medium hohe Mengen an herauszufilternden Partikeln oder Gasen aufweist und wenn die Partikel einen sehr kleinen Partikeldurchmesser haben. Besonders vorteilhaft wird die Aktivkohle gemäß einer vorteilhaften Weiterbildung zum Abscheiden von Gasen eingesetzt.

Bevorzugt weist das Filtermaterial eine zweite Schicht auf, die Aktivkohle enthält. Die zweite Schicht ist vorzugsweise auf der ersten Schicht angeordnet. Hieraus ergibt sich eine Schichtfolge: erstes Substrat / erste Schicht / zweite Schicht. Durch das Vorsehen der Aktivkohle in Form einer zweiten Schicht können die Filtereigenschaften gezielter eingestellt werden, da die Faktoren wie Schichtdicke, Flächengewicht und auch Luftdurchlässigkeit unabhängig voneinander einstellbar sind. Somit kann durch die Schichtzusammensetzung das Filtermaterial auf seine spezifische Anwendung hin konfiguriert werden.

Die zweite Schicht kann beispielsweise direkt auf der ersten Schicht abgeschieden werden. Vorteilhafterweise umfasst das Filtermaterial aber ein zweites Substrat, auf dem die zweite Schicht angeordnet ist. Hierdurch wird der Aktivkohlefilter separat herstellbar und handelbar. Auch kann, je nach Verbindungsart der zweiten Schicht mit der ersten Schicht, die entsprechende Schicht bei Bedarf ausgewechselt werden, beispielsweise wenn die maximale Adsorptionskapazität erreicht ist. Es ergibt sich für diese vorteilhafte Weiterbildung eine Schichtanordnung mit: erstes Substrat / erste Schicht / zweite Schicht / zweites Substrat. Die erste und die zweite Schicht können beispielsweise mittels Laminierung oder Verklebung miteinander verbunden sein und hierzu ggf. etwaige Hilfsstoffe umfassen.

Das zweite Substrat kann wie das erste Substrat ausgebildet sein. Insbesondere ist das zweite Substrat ausgewählt aus mindestens einem Spinnvlies, einem Nassvlies, einem Stapelvlies, einem Gelege, einem Gewirke, einem Gewebe, einem Gestricke und Kombinationen daraus.

Aufgrund der sehr guten mechanischen und chemischen Stabilität ist das Material des zweiten Substrats vorzugsweise ein Polyolefin und ist insbesondere Polypropylen.

Um die Filterwirkung nicht zu beeinträchtigen, sondern zu verbessern, hat das zweite Substrat vorzugsweise ein Flächengewicht in einem Bereich von 20 bis 100 g/m² und insbesondere von 40 bis 80 g/m². Das Flächengewicht wird mittels EN 29073-1 : 1992 gemessen. Liegt das Flächengewicht besonders niedrig, also bei vorzugsweise 40 g/m² und weiter bevorzugt bei 20 g/m², so zeichnet sich das Filtermaterial durch einen verbesserten Luftdurchlass aus, sofern das Filtermaterial als Luft- oder Gasfilter eingesetzt wird. Höhere Flächengewichte von insbesondere mehr als 80 g/m² oder sogar mehr als 100 g/m² können nachteilig in Bezug auf ein "Zusetzen" des Filters, also ein schnelles Erreichen der maximalen Adsorptionskapazität sein. Aus den vorstehend genannten Gründen ist ein Flächengewicht des zweiten Substrats von 40 bis 80 g/m² besonders vorteilhaft.

Die Schichtdicke des zweiten Substrats ist im Wesentlichen nicht eingeschränkt, liegt aber, aufgrund der mechanischen Stabilität des Filtermaterials bevorzugt in einem Bereich von 200 bis 800 µm und weiter vorteilhaft in einem Bereich von 450 bis 600 µm. Sehr hohe Schichtdicken von mehr als 600 µm oder sogar von mehr als 800 µm können nachteilig sein in Bezug auf unterschiedliche Anwendungsgebiete, in denen kleindimensionierte Filtermaterialien erforderlich sind. Die Schichtdicke wird wie die Schichtdicke des ersten Substrats gemessen und es kann auf das vorstehend ausgeführte Verfahren verwiesen werden.

Für eine hohe Filterleistung, also große Durchsatzvolumina, ist es zudem von Vorteil, wenn das zweite Substrat eine Luftdurchlässigkeit von 1500 bis 6000 l/m²·s, vorzugsweise von 2000 bis 4500 l/m²·s, hat. Die Luftdurchlässigkeit wird wiederum mittels DIN EN ISO 9237 : 1995 bestimmt, wobei als Messdruck 100 Pa und als Messfläche 20 cm² dienen.

Zur weiteren Verbesserung der Adsorptionskapazität des erfindungsgemäßen Filtermaterials ist gemäß einer weiteren vorteilhaften Weiterbildung vorgesehen, dass die Aktivkohle eine Körnung von Siebgrößen von 20x50 mesh bis 60x150 mesh, insbesondere von 30x60 bis 60x120 mesh aufweist. Liegt die Körnung in einem der vorstehend angegebenen Bereiche, so eignet sich die Aktivkohle insbesondere zur Adsorption von n-Butan, das als Sondengas im automobilen Umfeld eingesetzt wird.

Die Filtereffizienz kann weiter vorteilhaft dadurch gesteigert werden, dass die zweite Schicht Hotmelt-Klebefäden umfasst. Dabei sind vorzugsweise die Hotmelt-Klebefäden (4) und die Aktivkohle gemeinsam auf das zweite Substrat aufgebracht worden. Unter einem für die Erfindung geeigneten Hotmelt wird ein thermoplastisches Material verstanden, das einen Erweichungspunkt von 115 bis 170°C und insbesondere von 120 bis 165 °C hat. Die Erweichungspunkte wurden in Anlehnung an DIN 51920 (Ausgabe: 1984) gemessen, wobei eine Bleikugel auf die Klebstoffoberfläche aufgelegt, wird die den Klebstoff durch den Nippel drückt. Die Bleikugel hat eine Masse von 3,2 +/- 0,2 g (Kaliber 32) und der Nippel weist eine 6,35 mm große Bohrung zur Aufnahme des geschmolzenen Hotmelts auf. Ein für die Erfindung geeignetes Hotmelt hat ferner adhäsive Eigenschaften bei der Anwendungstemperatur des Filtermaterials bei dessen bestimmungsgemäßen Gebrauch. Die Hotmelt-Klebefäden können nicht nur zusätzlich, insbesondere gröbere Partikel, binden, sondern schützen und fixieren auch die Aktivkohleschicht, also die zweite Schicht. Die Hotmelt-Klebefäden liegen vorteilhafterweise in Form eines oberflächenklebrigen Adhäsionsnetzes vor. Dieses klebrige Adhäsionsnetz kann auch als netzartige Adhäsionsschicht bezeichnet werden, welche eine Komponente der zweiten Schicht ist und aufgrund der Klebrigkeit eine zusätzliche Abscheidung von zu filternden Substanzen bewirken kann. Die Oberflächenklebrigkeit eines Hot Melts kann zum Beispiel durch gezielte Zugabe von Tackifiern erhöht werden.

Vorzugsweise sind die Hotmelt-Klebefäden polyolefinische Hotmelt-Klebefäden, insbesondere amorphe polyalphaolefinische Hotmelt-Klebefäden. Weiter bevorzugt haben die Hotmelt-Klebefäden einen Durchmesser von 5 bis 60 µm, bevorzugt von 20 bis 40 µm. Besonders bevorzugt sind polyalphaolefinische Hotmelt-Klebefäden auf Basis von Propylen. Durch die Hotmelt-Klebefäden können in vorteilhafter Weise vornehmlich gröbere Staubpartikel angelagert und ausgefiltert werden, so dass die nachfolgenden Lagen geschützt werden.

Es ergibt sich für diese vorteilhafte Weiterbildung eine Schichtanordnung mit: erstes Substrat / erste Schicht / Hotmelt-Klebefäden enthaltende zweite Schicht / zweites Substrat. Ein derart ausgebildetes Filtermaterial hat eine sehr hohe Filterkapazität, insbesondere für Partikel aller Größen, die durch die verschiedenen Schichten ausgefiltert werden. Hierzu hat das Filtermaterial vorzugsweise eine Schichtdicke in einem Bereich von 500 bis 2500 µm, noch bevorzugter von 800 bis 2000 µm und insbesondere von 1500 bis 1800 µm, wobei die Schichtdicke unter Verwendung einer Messuhr (Mitutoyo 543-271B) in einem Messbereich bis 12,7 mm, bei einer Auflösung von 0,01 mm, einer Messkraft von 1,5 N, einem Stempeldurchmesser von 12 mm mit einer Auflagefläche von 113,1 mm² und einem Stempelgewicht von 15 g bestimmt wird.

Vorzugsweise hat dieses Filtermaterial ein Flächengewicht, gemessen mittels EN 29073-1 : 1992, in einem Bereich von 250 bis 500 g/m² und insbesondere in einem Bereich von 300 bis 400 g/m². Hierdurch kann bei sehr guter Filtereffizienz der Druckdifferenzanstieg minimiert werden und das Filtermaterial für nahezu alle Anwendungsbereiche insbesondere für Luftreinigung, eingesetzt werden.

Eine weitere vorteilhafte Weiterbildung ist dadurch gekennzeichnet, dass das Filtermaterial eine Luftdurchlässigkeit von 100 bis 150 l/m²·s hat. Dies maximiert die Filterkapazität, also das Durchsatzvolumen des zu filternden Mediums bei gleichzeitig sehr hoher Filtereffizienz. Die Luftdurchlässigkeit des Filtermaterials wird wiederum wie in DIN EN ISO 9237 : 1995 beschrieben, gemessen, mit einem Messdruck von 200 Pa und einer Messfläche von 20 cm².

Das Filtermaterial kann weiter vorteilhaft ferner einen Elektretvorfilter umfassen. Hierdurch können die Anfangsfiltereffizienzen gesteigert werden. Der Elektretvorfilter kann insbesondere mit dem ersten Substrat oder dem zweiten Substrat verbunden sein, insbesondere durch Laminierung, Verklebung oder z.B. auch durch eine Ultraschallschweißung. Unter einem Elektretvorfilter wird gemäß der vorliegenden Erfindung eine Filterschicht verstanden, die elektrostatisch aufgeladen ist, z.B. mittels Corona- oder Hochspannungstechnologie. Dadurch kann auch das Staubspeichervermögen weiter verbessert werden.

Ferner erfindungsgemäß wird auch ein Luftfilter (hierunter wird auch ein Gasfilter verstanden, wie z.B. auch ein Abgasfilter), ein Wasserfilter oder ein Partikelfilter beschrieben, der das vorstehend offenbarte Filtermaterial umfasst. Ein derart ausgebildeter Luftfilter, Wasserfilter oder Partikelfilter zeichnet sich aufgrund der Verwendung des erfindungsgemäßen Filtermaterials durch eine hohe Abscheiderate von Partikeln bei gleichzeitig langer Anwendungsdauer und damit durch große Wechselintervalle aufgrund von geringem Druckdifferenzanstieg aus.

Darüber hinaus wird erfindungsgemäß auch ein Verfahren zur Herstellung eines Filtermaterials beschrieben. Bei dem Filtermaterial kann es sich um das vorstehend beschriebene Filtermaterial handeln. Mit anderen Worten kann das erfindungsgemäße Verfahren dazu verwendet werden, das erfindungsgemäße Filtermaterial herzustellen.

Das Verfahren umfasst zunächst einen Schritt des Herstellens einer Polypropylenschmelze, wobei das Polypropylen für die Polypropylenschmelze eine Schmelzflussrate MFR von 800 bis 4000 g/10 min und insbesondere von 1100 bis 2800 g/10 min hat. Es handelt sich daher um ein niedrigviskoses Polypropylen. Hierbei versteht es sich von selbst, dass eine Type Polypropylen oder zwei oder mehrere Typen von Polypropylen verwendet werden können, die sich z.B. in ihrer Taktizität, ihrem Molekulargewicht oder ihrer Polydispersität unterscheiden können. Vorteilhaft ist hierbei, dass wenn zwei oder mehrere Polypropylentypen in Kombination eingesetzt werden, die Schmelzflussrate jedes einzelnen Polypropylentyps in einem Bereich von 800 bis 4000 g/10 min liegt. Die Schmelzflussrate MFR wird dabei mittels ISO 1133-1 (2022) gemessen. Das Aufschmelzen des Polypropylens zur Herstellung der Polypropylenschmelze erfolgt insbesondere bei einer Temperatur von 200 bis 300 °C. Dies ist vorteilhaft, da die Schmelze so noch feiner wird und noch besser ausgezogen werden kann.

Die Polypropylenschmelze kann direkt als Schmelzblasgemisch zum Schmelzblasen verwendet werden. Bevorzugt wird der Polypropylenschmelze jedoch mindestens ein sterisch gehinderter Hydroxylaminester beigemengt und mit der Polypropylenschmelze vermischt, wodurch ein Hydroxylaminester enthaltendes Schmelzblasgemisch hergestellt wird. Ein Gehalt an dem sterisch gehinderten Hydroxylaminester in der Schmelzspinnlösung liegt dabei vorzugsweise in einem Bereich von 0,1 bis 5, bevorzugt 0,1 bis 3 Masse%, insbesondere 0,1 bis 2,5 Masse%, bezogen auf das Gesamtgewicht des Schmelzblasgemischs. Unterschiedliche geeignete sterisch gehinderte Hydroxylaminester sind am Markt erhältlich und werden vorzugsweise in Form von Mischungen mit einem oder mehreren Polymeren angeboten. Beispielhaft kann Irgatec^{®} CR 25 oder Irgatec^{®} CR 76 des Herstellers BASF eingesetzt werden.

Sodann wird ein Schmelzblasen des Schmelzblasgemischs ausgeführt, die gesponnenen Polypropylenfasern mittels Luft einer Temperatur von mindestens 240°C (gemessen an der Düse), beispielsweise 240°C bis 300°C verstreckt und dann auf einem ersten Substrat unter Herstellung einer Polypropylenfilterlage abgelegt.

Das Schmelzblasen ergibt schmelzgeblasene (meltblown) PP-Fasern wobei die Polypropylenfasern mit einer relativen Häufigkeit, wie mittels des in der Beschreibung offenbarten Verfahrens bestimmt, von mindestens 20%, beispielsweise 20% bis 60%, bevorzugt von mindestens 25%, beispielsweise von 25% bis 60%, noch bevorzugter von 25% bis 55%, noch bevorzugter von 30% bis 50%, insbesondere von 35% bis 45%, einen Faserdurchmesser in einem Bereich von 400 nm bis 600 nm aufweisen und mit einer relativen Häufigkeit, wie mittels des in der Beschreibung offenbarten Verfahrens bestimmt, von mindestens 20%, bevorzugt von 20% bis 60%, noch bevorzugter 20% bis 50%, noch bevorzugter von 20% bis 40%, insbesondere von 25% bis 35%, einen Faserdurchmesser in einem Bereich von > 600 nm bis 800 nm aufweisen. Der Durchmesser der PP-Fasern kann dabei durch die Schmelzflussrate MFR des Polypropylens und durch den Gehalt an dem mindestens einen sterisch gehinderten Hydroxylaminester, der zur Herstellung der Spinnschmelze verwendet wird, eingestellt werden. Die Temperatur der zum Verstrecken verwendeten Luft beträgt mindestens 240°C (gemessen an der Düse), beispielsweise 240°C bis 300.

Das Schmelzblasen der PP-Fasern kann beispielsweise auf einer Meltblown-Anlage unter Einhaltung der folgenden Parameter ausgeführt werden:

| | |
|---|---|
| Düsentemperaturen | 275°C |
| Primärlufttemperatur | 280°C |
| Primärluftmenge | 1000m³/hxm (pro Stunde und Meter Düsenlänge) |
| DCD (die collector distance) | 300mm |

Das Verfahren ist einfach und ohne hohen technischen Aufwand umsetzbar und dient der Herstellung eines Filtermaterials mit hoher Filtereffizienz, guter Filterkapazität und sehr geringem Druckdifferenzanstieg.

Die für das erfindungsgemäße Filtermaterial beschriebenen Vorteile, vorteilhaften Effekte und Weiterbildungen finden auch Anwendung auf das erfindungsgemäße Verfahren zur Herstellung eines Filtermaterials.

Gemäß einer vorteilhaften Weiterbildung umfasst das erfindungsgemäße Verfahren zudem einen Schritt des Herstellens einer Aktivkohlefilterlage, wobei zunächst Aktivkohle auf ein zweites Substrat aufgebracht wird und dann Hotmelt-Klebefäden auf der Aktivkohle abgeschieden werden.

Zudem wird die Aktivkohlefilterlage mit der Polypropylenfilterlage verbunden, so dass sich die folgende Schichtanordnung ergibt: zweites Substrat / Hotmelt-Klebefäden enthaltende Aktivkohlefilterlage (zweite Schicht) / /Polypropylenfilterlage (erste Schicht) / erstes Substrat. Durch diese vorteilhafte Weiterbildung kann die Filterleistung weiter verbessert werden, da die Aktivkohle ein zusätzliches Adsorptionsvolumen mit höherer Adsorptionsfläche in das Filtermaterial einbringt und insbesondere auch Gase, wie beispielsweise Butan, ausgefiltert werden können.

Ferner erfindungsgemäß wird auch die Verwendung von schmelzgeblasenen Polypropylenfasern, wobei die Polypropylenfasern mit einer relativen Häufigkeit, wie mittels des in der Beschreibung offenbarten Verfahrens bestimmt, von mindestens 20%, beispielsweise 20% bis 60%, bevorzugt von mindestens 25%, beispielsweise von 25% bis 60%, noch bevorzugter von 25% bis 55%, noch bevorzugter von 30% bis 50%, insbesondere von 35% bis 45%, einen Faserdurchmesser in einem Bereich von 400 nm bis 600 nm aufweisen und mit einer relativen Häufigkeit, wie mittels des in der Beschreibung offenbarten Verfahrens bestimmt, von mindestens 20%, bevorzugt von 20% bis 60%, noch bevorzugter 20% bis 50%, noch bevorzugter von 20% bis 40%, insbesondere von 25% bis 35%, einen Faserdurchmesser in einem Bereich von > 600 nm bis 800 nm aufweisen, als Filtermateriallage beschrieben.

In der vorstehenden Verwendung hat weiter vorteilhaft die Filtermateriallage ein Flächengewicht mittels EN 29073-1 : 1992 gemessen in einem Bereich von 5 bis 20 g/m², insbesondere von 6 bis 15 g/m².

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: ein Filtermaterial gemäß einer ersten Ausführungsform im Schnitt,
- Fig. 2: ein Diagramm veranschaulichend die Effizienz einer zweiten Ausführungsform des Filtermaterials aufgetragen gegen die Partikelgröße der zu filternden Partikel
- Fig. 3: ein Diagramm, veranschaulichend die Staubrückhaltekapazität nach Druckverlustanstieg von 100 Pa und
- Fig. 4: eine REM-Aufnahme der Aufsicht eines Filtermaterials.

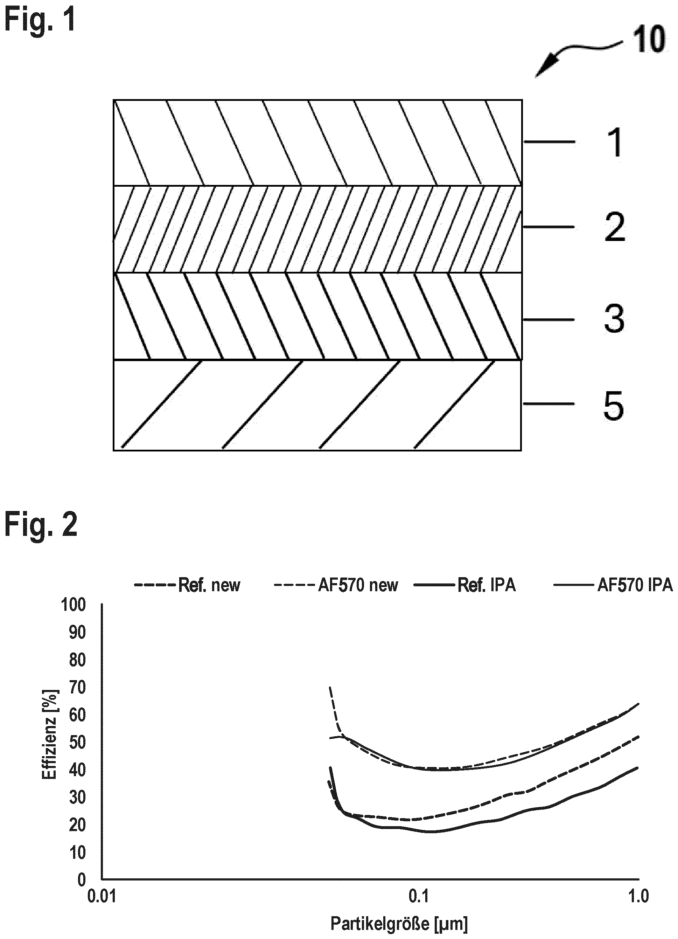

In den Figuren 1 bis 3 sind nur die wesentlichen Elemente und Komponenten der erfindungsgemäß vorteilhaften Aspekte dargestellt. Alle übrigen Elemente und Komponenten sind der Übersichtlichkeit halber weggelassen. Ferner beziffern gleiche Bezugszeichen gleiche Bauteile, Elemente oder Komponenten.

Figur 1 zeigt im Detail ein Filtermaterial 10 gemäß einer vorteilhaften Ausführungsform. Das Filtermaterial 10 ist im Schnitt gezeigt und hat folgende Schichtanordnung: Erstes Substrat 1, erste Schicht 2, zweite Schicht 3, zweites Substrat 5.

Das erste Substrat 1 ist vorzugsweise ein Spinnvlies mit einem Flächengewicht von 10 bis 20 g/m², gemessen mittels EN 29073-1 : 1992 und besteht aus Polypropylen. Es hat eine Schichtdicke in einem Bereich von 200 bis 300 µm, wobei die Schichtdicke gemessen wird, indem das Spinnvlies mit einem Stempel mit einer Fläche A von 10cm² und einer Kraft von 12,5cN belastet wird, wobei der Dickenmesswert in mm abgelesen wird (im Folgenden: ITM = internes Messverfahren angelehnt an DIN EN ISO 9073-2: 1996). Der Faserdurchmesser des ersten Substrats liegt vorteilhafterweise in einem Bereich von 20 bis 30 µm.

Die erste Schicht 2 ist aus schmelzgeblasenen Polypropylenfasern gebildet, wobei die Polypropylenfasern mit einer relativen Häufigkeit, wie mittels des in der Beschreibung offenbarten Verfahrens bestimmt, von mindestens 20% einen Faserdurchmesser in einem Bereich von 400 nm bis 600 nm aufweisen und mit einer relativen Häufigkeit, wie mittels des in der Beschreibung offenbarten Verfahrens bestimmt, von mindestens 20% einen Faserdurchmesser in einem Bereich von > 600 nm bis 800 nm aufweisen. Der Faserdurchmesser wird anhand von REM-Aufnahmen (2000-fache Vergrößerung) wie im Kapitel Messmethoden dargelegt bestimmt. Durch die submicronen PP-Fasern mit der spezifischen Faserdurchmesser-Verteilung wird eine hohe Filterkapazität bei gleichzeitig niedrigem Druckdifferenzanstieg erzielt, so dass sich das Filtermaterial 10 durch dauerhaft sehr hohe Adsorptionseigenschaften und damit große Wechselintervalle auszeichnet.

Zwischen den PP-Fasern der ersten Schicht 2 und dem ersten Substrat 1 besteht eine hohe Adhäsion aufgrund der Verwendung desselben chemischen Materials. Zudem sind die PP-Fasern direkt durch Schmelzspinnen auf dem ersten Substrat 1 abgeschieden, wodurch sich ein noch besserer Schichtverbund ergibt.

Die nächste Schicht ist eine zweite Schicht 3, eine Aktivkohleschicht oder Aktivkohlelage, die Aktivkohle enthält. Sie verbessert die Adsorptionsrate, insbesondere für Partikel mit kleiner Partikelgröße und Gase, da die Aktivkohle eine große Adsorptionsoberfläche aufweist.

Die zweite Schicht 3 enthält neben der Aktivkohle ein Netz aus Hotmelt-Klebefäden, die aus PP gebildet sind und einen Schmelzbereich von etwa 110 °C aufweisen. Die Hotmelt-Klebefäden wurden direkt auf der Aktivkohle der zweiten Schicht 3 abgeschieden, so dass sie die Aktivkohle fixieren und schützen. Die Hotmelt-Klebefäden 4 können aufgrund ihrer Klebrigkeit insbesondere Partikel mit großem Partikeldurchmesser herausfiltern. Die Aktivkohle und die Schicht aus Hotmelt-Klebefäden 4 bilden eine gemeinsame heterogene Schicht, also eine Einheit (zweite Schicht 3).

Bezugszeichen 5 stellt ein zweites Substrat dar, das wie das erste Substrat 1 ausgebildet sein kann und insbesondere ebenfalls aus PP gebildet ist. Es dient als Träger für die Aktivkohle und trägt zum mechanischen Schutz des Filtermaterials 10 bei und ist mit seinem Flächengewicht, seiner Schichtdicke und seiner Luftdurchlässigkeit so ausgebildet, dass die Filtereffizienz nicht beeinträchtigt wird und auch kein Druckdifferenzanstieg hierüber eingetragen wird.

Figur 2 ist ein Diagramm, das die Effizienz einer zweiten Ausführungsform des Filtermaterials gegen die Partikelgröße der zu filternden Partikel veranschaulicht.

Das Filtermaterial wurde wie folgt hergestellt:
Zunächst wurde eine Polymerschmelze durch das Aufschmelzen eines metallocenkatalysierten PPs (MFR 1800 g/10 min, gemäß ISO 1133-1 bei 230 °C) hergestellt.

Anschließend wurde kontinuierlich Irgatec^{®} CR 25 (Hersteller: BASF), ein sterisch gehinderter Hydroxylaminester in einer PP-Matrix, hinzugefügt, sodass der Gehalt an dem sterisch gehinderten Hydroxylaminester in dem Schmelzblasgemisch in einem Bereich von 0,1 bis 2,5 Masse% bezogen auf das Gesamtgewicht der Schmelzblaslösung liegt. Die PP-Matrix fließt nicht in die Bestimmung des Gehalts an Hydroxylaminester ein.

Die Verarbeitung erfolgte bei 250 °C. Dies bedeutet, dass das vorstehend beschriebene Schmelzblasgemisch aus PP und Irgatec CR^{®} 25 bei einer Temperatur von etwa 250 °C gesponnen und auf ein PP Spinnvlies mit einem Flächengewicht von 15 g/m² als erstes Substrat aufgesponnen wurde, wobei die Fasern während des Spinnens mittels warmer Luft (hier etwa 280 °C = Primärlufttemperatur) zusätzlich verstreckt wurden.

Hierfür wurde eine Meltblown-Anlage verwendet, wobei folgende Parameter eingehalten wurden:

| | |
|---|---|
| Düsentemperaturen | 275°C |
| Primärlufttemperatur | 280°C |
| Primärluftmenge | 1000m³/hxm (pro Stunde und Meter Düsenlänge) |
| DCD (die collector distance) | 300mm |

Das PP Spinnvlies hatte eine Schichtdicke, wie für das erste Substrat in Fig. 1 gemessen, von 0,20 mm. Das resultierende zweilagige Laminat wies eine Schichtdicke von 0,26 mm, ein Flächengewicht (gemessen mittels EN 29073-1 :1992) von 25 g/m² und eine Luftdurchlässigkeit, gemessen mittels DIN EN ISO 9237 : 1995 bei einem Messdruck von 200 Pa und einer Messfläche von 20 cm2 von 450 l/m².s auf. Die beiden Materialschichten wurden zur verbesserten Haftung kalandriert.

Die Schichtdicke der schmelzgeblasenen PP-Faserschicht (Polypropylenfilterlage) betrug somit 0,06 mm und die Faserdurchmesser der gewonnenen einzelnen Filamente wurden, wie im Kapitel Messmethoden bestimmt. Es wurde gefunden, dass alle Fasern einen Faserdurchmesser von weniger als 5 µm haben und die Fasern mit einer relativen Häufigkeit, wie mittels des in der Beschreibung offenbarten Verfahrens bestimmt, von mindestens 20% einen Faserdurchmesser in einem Bereich von 400 nm bis 600 nm aufweisen und mit einer relativen Häufigkeit, wie mittels des in der Beschreibung offenbarten Verfahrens bestimmt, von mindestens 20% einen Faserdurchmesser in einem Bereich von > 600 nm bis 800 nm aufweisen.

In einem zweiten Arbeitsschritt erfolgte die Herstellung einer Aktivkohlefilterlage unter Verwendung der obigen Polypropylenfilterlage als Abdeckmaterial. Das eingesetzte zweite Substrat war PP Spinnvlies mit einem Flächengewicht von 60 g/m², einer Schichtdicke von 0,45 mm und einer Luftdurchlässigkeit von 2650 (100 Pa)l/m².s, gemessen mittels DIN EN ISO 9237 : 1995 bei einem Messdruck von 100 Pa und einer Messfläche von 20 cm², welches mit einer Aktivkohle mit einem Flächengewicht von 230 g/m2 (30x60mesh Körnung, Basis Kokosnußschale) und PP Hotmelt-Klebefäden (Jowatherm 238.75) beschichtet wurde und mit dem obigen, zweilagigen Abdeckmaterial ausgestattet wurde. Die Durchmesser der Hot Melt Filamente lagen bei 10-20 um.

Das gewonnene Aktivkohlelaminat wies folgende technische Daten auf: Flächengewicht, gemessen mittels EN 29073-1 : 1992, von 370 g/m², eine Schichtdicke von 1,60 mm und eine Luftdurchlässigkeit, gemessen mittels DIN EN ISO 9237 : 1995 bei einem Messdruck von 100 Pa und einer Messfläche von 20 cm², von 130 l/m²·s.

Als Referenz diente ein analog aufgebautes Aktivkohlelaminat mit einem kommerziell erhältlichen Nanofasermedium (Polyester-Spinnvliessubstrat mit einem Flächengewicht von 30 g/m², PVDF-Nanofasern (Faserdurchmesser unter 100 nm) und einem Polyester-Abdecker mit einem Flächengewicht von 30 g/m²) mit einem Gesamtflächengewicht von 60 g/m² sowie einer Schichtdicke, gemessen mittels ITM von 0,22 mm und einer Luftdurchlässigkeit, gemessen mittels DIN EN ISO 9237 : 1995 bei einem Messdruck von 200 Pa und einer Messfläche von 20 cm², von 425 l/m²·s.

Für die filtertechnischen Untersuchungen (Fraktionsabscheidegrad = Effizienz in Abhängigkeit der Partikelgröße, und Staubspeichervermögen) gilt DIN 71460-1 2006 (Strassenfahrzeuge - Luftfilter für Kraftfahrzeuginnenräume - Teil 1: Prüfverfahren für Partikelfiltration), die die apparativen Erfordernisse und Prüfverfahren beschreibt, wobei die Ergänzung DIN 71460-3 2020-10 (Strassenfahrzeuge - Luftfilter für Kraftfahrzeuginnenräume - Teil 3: PMx basierte Filtereffizienzprüfung eff (PMx)) auf Einsatz des DEHS-Aerosols verweist. Insofern wurde die Untersuchung mit DEHS-Aerosol durchgeführt. Der für die Bestaubung eingesetzte SAE Fine Staub ist vergleichbar zu dem A.2 Fine Test Dust, der in der ISO 12103-1:2016(E) beschrieben ist.

In Figur 2 sind vier Kurven dargestellt. "Ref. new ist das kommerzielle Nanofaser-Filtermaterial, das als Referenz diente und AF570 new entspricht dem erfindungsgemäßen Filtermaterial, dessen Herstellung eingangs zu Fig. 2 beschrieben ist. Die jeweiligen Kurven, die mit "IPA" gekennzeichnet sind, sind Kurven, die nach Entladung des jeweiligen Filters mit Isopropanol erhalten wurden. Fig. 2 zeigt, dass über alle Partikelgrößen hinweg das erfindungsgemäße Filtermaterial eine höhere Effizienz hat.

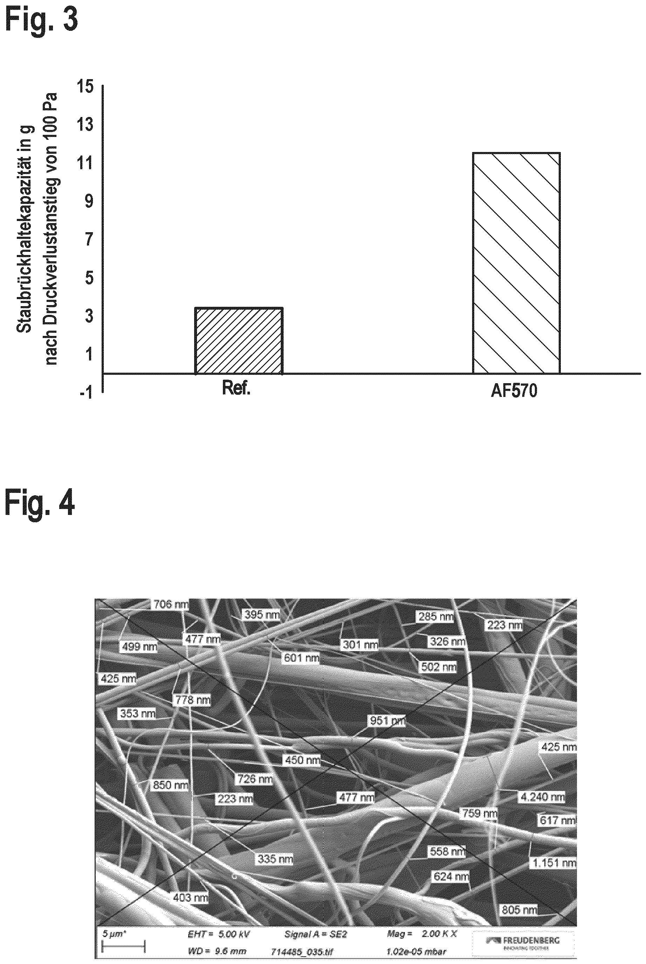

Fig. 3 ist ein Diagramm, das die Staubrückhaltekapazität des Referenz-Filtermaterials (Ref.) und des erfindungsgemäßen Filtermaterials (AF570) nach Druckverlustanstieg von 100 Pa zeigt. Fig. 3 zeigt im Detail, dass die Staubrückhaltekapazität des erfindungsgemäßen Filtermaterials um ein Vielfaches höher ist nach Druckverlustanstieg, als diejenige des Referenz-Filtermaterials.

Fig. 4 zeigt eine REM-Aufnahme der Aufsicht eines Filtermaterials Es wurden anhand des im Kapitel Messverfahren und Normen beschriebenen Verfahrens die relative Häufigkeit des Faserdurchmessers der Polypropylenfasern bestimmt. Dabei wurden folgende Ergebnisse erhalten:
400nm bis 600nm = 34%
600nm bis 800nm = 24%
Sonstige = 42%

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Messverfahren und Normen

### Relative Häufigkeit des Faserdurchmessers der Polypropylenfasern

Erfindungsgemäß wird die Bestimmung der relativen Häufigkeit des Faserdurchmessers der Polypropylenfasern wie folgt durchgeführt. Es wird die Aufsicht auf ein DINA4-Muster eines erfindungsgemäßen Filtermaterials betrachtet. Falls die erste Schicht durch eine äußere Schicht verdeckt ist, beispielsweise weil auf ihr ein Abdecker oder ein erstes Substrat angeordnet ist, wird die erste Schicht durch vorsichtiges Abziehen mit einer Pinzette freigelegt. Gegen Aufladung während der folgenden Messung wird die Oberfläche besputtert. Von der Oberfläche werden an 40 verschiedenen Messpositionen (statistisch verteilt, wobei nur Messpositionen berücksichtig werden, die mindestens 30 voneinander differenzierbare und fokussierte Fasern zeigen) REM-Aufnahmen (Sekundär Elektronen-Detektor) mit 2000 facher Vergrösserung und einer Auflösung von 1024 auf 768 Pixel aufgenommen.

Die Bestimmung der relativen Häufigkeit des Faserdurchmessers erfolgt dergestalt, dass ausgehend von den Bildecken zwei Hilfsdiagonalen über jede Bildaufnahme gelegt werden.

Es werden nur die Faserdurchmesser derjenigen Polypropylenfasern berücksichtigt, die von zumindest einer der beiden Hilfsdiagonalen geschnitten werden. Der Faserdurchmesser wird am Schnittpunkt mit der Hilfsdiagonalen gemessen. Schneidet eine Polypropylenfaser beide Diagonalen oder die Diagonalen mehrfach, fließt jeweils nur ein Wert in die Betrachtung ein. Es wird zunächst die Gesamtzahl der ermittelten Faserdurchmesser bestimmt. Diese entspricht der Anzahl sämtlicher Polypropylenfasern, die zumindest eine der beiden Diagonalen schneiden (Bezugsanzahl). Von der Gesamtzahl der ermittelten Faserdurchmesser (Bezugsanzahl) werden im nächsten Schritt die Anzahl derjenigen Faserdurchmesser ermittelt, die in einem Bereich von 400 nm bis 600 nm liegen sowie die Anzahl derjenigen Faserdurchmesser, die in einem Bereich von > 600 nm bis 800 nm liegen. Der Quotient der Anzahl der Faserdurchmesser, die in dem jeweiligen Bereich liegen und der Gesamtzahl der ermittelten Faserdurchmesser multipliziert mit 100 ergibt die relative Häufigkeit [%] dieser Faserdurchmesser. Es wird der Mittelwert über die Ergebnisse der untersuchten Bildaufnahmen gebildet.

### Schmelzflussrate MFR

Zunächst wurde eine Polypropylenschmelze durch das Aufschmelzen eines Metallocen katalysierten PPs hergestellt MFR 1800 g/10 min, gemessen mittels ISO 1133-1). Die aufgeheizte Probe wird bei 230°C mit einem Gewicht von 2,16 kg belastet und der Ausfluss über einen Zeitraum von 10 min. festgestellt.

### Bezugszeichenliste

- 1: erstes Substrat
- 2: erste Schicht
- 3: zweite Schicht
- 5: zweites Substrat
- 10: Filtermaterial

## Patentansprüche

1. Filtermaterial (10) umfassend eine erste Schicht (2), umfassend schmelzgeblasene Polypropylenfasern, die mit einer relativen Häufigkeit, wie mittels des in der Beschreibung offenbarten Verfahrens bestimmt, von mindestens 20%, beispielsweise von 20% bis 60%, einen Faserdurchmesser in einem Bereich von 400 nm bis 600 nm aufweisen und mit einer relativen Häufigkeit, wie mittels des in der Beschreibung offenbarten Verfahrens bestimmt, von mindestens 20%, beispielsweise von 20% bis 60%, einen Faserdurchmesser in einem Bereich von > 600 nm bis 800 nm aufweisen.

2. Filtermaterial (10) nach Anspruch 1, wobei die erste Schicht (2) aus schmelzgeblasenen Polypropylenfasern mit einem Faserdurchmesser von weniger als 5 µm besteht, wobei die Polypropylenfasern mit einer relativen Häufigkeit, wie mittels des in der Beschreibung offenbarten Verfahrens bestimmt, von 20% bis 60% einen Faserdurchmesser in einem Bereich von 400 nm bis 600 nm aufweisen und mit einer relativen Häufigkeit, wie mittels des in der Beschreibung offenbarten Verfahrens bestimmt, von 20% bis 60%, einen Faserdurchmesser in einem Bereich von > 600 nm bis 800 nm aufweisen.

3. Filtermaterial (10) nach Anspruch 1 oder 2, wobei die erste Schicht (2) eine Schichtdicke in einem Bereich von 10 µm bis 200 µm, bevorzugt von 20 µm bis 150 µm und insbesondere von 40 µm bis 80 µm aufweist.

4. Filtermaterial (10) nach einem der vorhergehenden Ansprüche, ferner umfassend ein erstes Substrat (1), wobei die erste Schicht (2) auf dem ersten Substrat (1) angeordnet ist und wobei insbesondere die Polypropylenfasern auf dem ersten Substrat (1) abgeschieden sind, wobei das erste Substrat (1) ausgewählt ist aus mindestens einem ausgewählt aus einem Spinnvlies, Nassvlies, Stapelvlies, Gelege, Gewirke, Gewebe, Gestricke und Kombinationen daraus.

5. Filtermaterial (10) nach einem der vorhergehenden Ansprüche, wobei das Filtermaterial (10) eine Schichtdicke in einem Bereich von 60 bis 600 µm, vorzugsweise von 100 bis 400 µm und insbesondere von 200 bis 300 µm aufweist.

6. Filtermaterial (10) nach einem der vorhergehenden Ansprüche, ferner umfassend eine zweite Schicht (3) umfassend Aktivkohle, wobei die zweite Schicht (3) vorzugsweise auf der ersten Schicht (2) angeordnet ist.

7. Filtermaterial (10) nach Anspruch 6, wobei das Filtermaterial (10) ein zweites Substrat (5) umfasst und die zweite Schicht (3) auf dem zweiten Substrat (5) angeordnet ist, wobei das zweite Substrat (5) ausgewählt ist aus mindestens einem ausgewählt aus einem Spinnvlies, Nassvlies, Stapelvlies, Gelege, Gewirke, Gewebe, Gestricke und Kombinationen daraus.

8. Filtermaterial (10) nach Anspruch 7, wobei das zweite Substrat (5) eine Schichtdicke in einem Bereich von 200 bis 800 µm, insbesondere von 450 bis 600 µm aufweist.

9. Filtermaterial (10) nach einem der Ansprüche 6 bis 8, wobei die Aktivkohle eine Körnung von Siebgrößen von 20x50 mesh bis 60x150 mesh aufweist und insbesondere von 30x60 bis 60x120 mesh.

10. Filtermaterial (10) nach einem der Ansprüche 6 bis 9, wobei die zweite Schicht (3) Hotmelt-Klebefäden (4) umfasst, wobei die Hotmelt-Klebefäden (4) und die Aktivkohle gemeinsam auf das zweite Substrat aufgebracht wurden, wobei das Material der Hotmelt-Klebefäden vorzugsweise mindestens ein Polyolefin, insbesondere Polypropylen ist.

11. Filtermaterial (10) nach einem der Ansprüche 7 bis 9 umfassend die folgende Schichtanordnung: erstes Substrat (1) / erste Schicht (2) / zweite Schicht (3) / zweites Substrat (5), wobei das Filtermaterial (10) eine Schichtdicke in einem Bereich von 500 bis 2500 µm, noch bevorzugter von 800 bis 2000 µm und insbesondere von 1500 bis 1800 µm aufweist.

12. Luftfilter, Wasserfilter oder Partikelfilter, umfassend das Filtermaterial (10) nach einem der vorhergehenden Ansprüche.

13. Verfahren zur Herstellung eines Filtermaterials (10), vorzugsweise eines Filtermaterials (10) nach einem oder mehreren der Ansprüche 3 bis 11 umfassend die Schritte:
- Herstellen einer Polypropylenschmelze, wobei das Polypropylen eine Schmelzflussrate MFR von 800 bis 4000 g/10 min, insbesondere von 1100 bis 2800 g/10 min hat,
- Zufügen mindestens eines sterisch gehinderten Hydroxylaminesters, wobei ein Schmelzblasgemisch mit einem Gehalt an dem sterisch gehinderten Hydroxylaminester in dem Schmelzblasgemisch in einem Bereich von 0,1 bis 5 Masse%, bevorzugt 0,1 bis 3 Masse%, insbesondere 0,1 bis 2,5 Masse%, bezogen auf das Gesamtgewicht des Schmelzblasgemischs erhalten wird,
- Schmelzblasen des Schmelzblasgemischs unter Verstreckung mit Luft einer Temperatur von mindestens 240°C, gemessen an der Düse, beispielsweise 240°C bis 300°C unter Erhalt von schmelzgeblasenen Polypropylenfasern, vorzugsweise mit einem Faserdurchmesser von weniger als 1 µm, wobei die Polypropylenfasern mit einer relativen Häufigkeit, wie mittels des in der Beschreibung offenbarten Verfahrens bestimmt, von mindestens 20%, beispielsweise von 20% bis 60%, einen Faserdurchmesser in einem Bereich von 400 nm bis 600 nm aufweisen und mit einer relativen Häufigkeit, wie mittels des in der Beschreibung offenbarten Verfahrens bestimmt, von mindestens 20 %, beispielsweise von 20% bis 60%, einen Faserdurchmesser in einem Bereich von > 600 nm bis 800 nm aufweisen und
- Ablegen der gesponnenen Polypropylenfasern auf einem ersten Substrat (1) unter Herstellung einer Polypropylenfilterlage.

14. Verfahren nach Anspruch 13, ferner umfassend die Schritte:
- Herstellen einer Aktivkohlefilterlage, umfassend:
∘ Aufbringen von Aktivkohle auf ein zweites Substrat (5)
∘ Ablegen von Hotmelt-Klebefäden (4) auf der Aktivkohle und
- Verbinden der Aktivkohlefilterlage mit der Polypropylenfilterlage, so dass sich die folgende Schichtanordnung ergibt: zweites Substrat (5) / Aktivkohlefilterlage = zweite Schicht (3) und Hotmelt-Klebefäden (4) / Polypropylenfilterlage = erste Schicht (2) / erstes Substrat (1).

15. Verwendung von schmelzgeblasenen Polypropylenfasern, vorzugsweise mit einem Faserdurchmesser von weniger als 1 µm, wobei die Polypropylenfasern mit einer relativen Häufigkeit, wie mittels des in der Beschreibung offenbarten Verfahrens bestimmt, von mindestens 20%, beispielsweise von 20% bis 60%, einen Faserdurchmesser in einem Bereich von 400 nm bis 600 nm aufweisen und mit einer relativen Häufigkeit, wie mittels des in der Beschreibung offenbarten Verfahrens bestimmt, von mindestens 20 %, beispielsweise von 20% bis 60%, einen Faserdurchmesser in einem Bereich von > 600 nm bis 800 nm aufweisen, als Filtermateriallage.
